# EUROPÄISCHE PATENTSCHRIFT

(11) **EP 0 994 797 B1**
(45) Veröffentlichungstag und Bekanntmachung des Hinweises auf die Patenterteilung: **02.05.2002**
(21) Anmeldenummer: 98940207.8
(22) Anmeldetag: 10.07.1998
(51) Int. Cl.: B60T 13/74

(54) **SYSTEM ZUM STEUERN ODER REGELN EINER ELEKTROMECHANISCHEN BREMSE**
SYSTEM FOR CONTROLLING OR REGULATING AN ELECTROMECHANICAL BRAKE
SYSTEME DE COMMANDE OU DE REGULATION DE FREIN ELECTROMECANIQUE

(30) Priorität: 14.07.1997 DE 19730094
(43) Veröffentlichungstag der Anmeldung: 26.04.2000
(73) Patentinhaber: Continental Teves AG & Co. oHG, 60488 Frankfurt am Main (DE)
(72) Erfinder: BÖHM, Jürgen, D-65558 Oberneisen (DE); SCHWARZ, Ralf, D-64297 Darmstadt (DE)
(74) Vertreter: Dusil, Vladimir, Dipl.-Ing.
(86) Internationale Anmeldenummer: EP9804307
(87) Internationale Veröffentlichungsnummer: WO9903714

(56) Entgegenhaltungen:
- EP-A- 0 703 133
- DE-A- 4 424 270
- DE-A- 19 526 645
- DE-A- 19 536 695

## Beschreibung

Die Erfindung bezieht sich auf ein Verfahren zum Steuern oder Regeln einer Bremse, mit einer mittels eines Aktuators elektrisch betätigbaren ersten Reibfläche sowie einer zweiten Reibfläche, zwischen denen ein Lüftspiel vorgesehen ist, mit Mitteln, die direkt oder indirekt die Position des Aktuators sowie den dem Aktuator zuzuführenden Strom erfassen, und mit einer Einrichtung, die das Anlegen der ersten an die zweite Reibfläche feststellt und daraufhin ein Kontaktsignal erzeugt, wobei zur Feststellung des Anlegens die Änderung des Aktuatorstromes und die Änderung der Aktuatorposition ausgewertet werden und dem ermittelten Aktuatorstrom ein Aktuatormoment bzw. eine Aktuatorkraft zugeordnet wird, sowie auf ein System zum Steuern oder Regeln einer elektrisch betätigbaren Bremse.

Ein derartiges Verfahren sowie ein System ist z. B. aus der deutschen Offenlegungsschrift DE 195 26 645 A1 bekannt. Im Rahmen des vorbekannten Verfahrens werden zur Bestimmung des Anlegepunktes der Bremsbeläge Informationen über das wirkende Bremsmoment bzw. die wirkende Bremskraft sowie über wenigstens eines der dem Aktuator eingesteuerten Signale erfaßt.

Die Erfindung beruht daher auf der Aufgabe, ein Verfahren zum Steuern bzw. Regeln vorzuschlagen, das eine Erkennung und Einstellung des Lüftspiels unter Verwendung aktuatorspezifischer Parameter ermöglicht, ohne daß eine Information über das wirkende Bremsmoment bzw. die wirkende Bremskraft erforderlich ist. Eine weitere Aufgabe der Erfindung besteht darin, ein Steuer- bzw. Regelsystem zur Erkennung und Nachstellung des Lüftspiels zu schaffen, das unabhängig von einer speziellen Bremsbetätigung arbeitet und darüberhinaus auch während der Fahrt des Kraftfahrzeuges ein Nachstellen des Lüftspiels ermöglicht.

Diese Aufgabe wird verfahrenmäßig dadurch gelöst, daß zur Feststellung des Anlegens die aktuatorseitige Systemsteifigkeit als Ableitung des Aktuatormoments bzw. der Aktuatorkraft nach der Aktuatorposition ermittelt wird.

Zur Konkretisierung des Erfindungsgedankens ist vorgesehen, daß die aktuatorseitige Systemsteifigkeit auf Über- oder Unterschreiten eines Schwellenwerts überwacht wird.

Die Verwendung der Systemsteifigkeitsgröße hat gegenüber dem gattungsbildenden Verfahren folgende Vorteile:
a) Die Größe Systemsteifigkeit kann sowohl in der Initialisierungsphase (also beim Neueinstellen des Lüftspiels nach z.B. Starten des Fahrzeuges) als auch während der Betätigung der Bremse bei einem Bremsvorgang zur Bestimmung des Anlegepunktes verwendet werden, sie eignet sich auch zum Nachstellen des Lüftspiels bei jedem Bremsvorgang.
b) Die Auswertung der Systemsteifigkeit erfordert kein Umschalten zwischen den zwei Betriebsmodi der Leistungselektronik 'drehzahlgeregelt' und 'momentengeregelt', da das Anregungssignal während der Detektion kein konstantes Moment sein muß.

Weitere vorteilhafte Merkmale des erfindungsgemäßen Verfahrens sind den Unteransprüchen 2 bis 10 zu entnehmen.

Ein erfindungsgemäßes Steuer- und Regelsystem zur Durchführung des vorhin erwähnten Verfahrens zeichnet sich dadurch aus, daß
a) ein zwischen einem ersten und einem zweiten Regelmodus umschaltbarer Regler vorgesehen ist, dem als Eingangsgrößen einen Sollwert und einen Istwert einer bei der Betätigung der Bremse gewünschten Kraft oder eines Moments repräsentierende Signale, ein die Aktuator-Sollposition repräsentierendes Signal, ein das Anlegen der ersten an die zweite Reibfläche repräsentierendes Kontaktsignal sowie eine Schaltvariable zugeführt werden und der eine erste Stellgröße erzeugt,
b) ein Lüftspiel-Führungs- und Überwachungsmodul vorgesehen ist, dem als Eingangsgrößen eine Steuervariable zum Aktivieren der Lüftspielerkennung sowie Signale zugeführt werden, die dem dem Aktuator zuzuführenden Strom sowie der Aktuatorposition entsprechen und welches das die Aktuator-Sollposition repräsentierende Signal, die Schaltvariable, eine zweite Schaltvariable sowie das Kontaktsignal liefert und eine zweite Stellgröße erzeugt,
c) wobei die erste Stellgröße und die zweite Stellgröße einer Auswahlschaltung zugeführt werden, die in Abhängigkeit von der zweiten Schaltvariablen eine der beiden Stellgrößen einer elektronischen Ansteuerschaltung zuführt, mit deren Ausgangssignal der Aktuator angesteuert wird.

Der erste Regelmodus des vorhin erwähnten Reglers entspricht dabei vorzugsweise einer Aktuatorpositionsregelung, während der zweite Regelmodus einer Bremskraft-/-moment- oder Verzögerungsregelung entspricht.

Das Lüftspiel-Führungs- und Überwachungsmodul besteht nach einer weiteren Ausführung des Erfindungsgegenstandes aus einem Sollwertgenerator sowie einer Einrichtung zur Feststellung des Anlegepunktes, wobei dem Sollwertgenerator die Steuervariable, und der Einrichtung zur Feststellung des Anlegepunktes die Signale als Eingangsgrößen zugeführt werden, die dem dem Aktuator zuzuführenden Strom sowie der Aktuatorposition entsprechen und wobei der Sollwertgenerator das die Aktuator-Sollposition repräsentierende Signal, die erste Schaltvariable, die zweite Schaltvariable sowie die zweite Stellgröße und die Einrichtung zur Feststellung des Anlegepunktes das das Anlegen der ersten an die zweite Reibfläche repräsentierende Signal erzeugen.

Die Einrichtung zur Feststellung des Anlegepunktes besteht dabei vorzugsweise aus einem ersten Modul zur Signalfilterung und Kompensation der Trägheitskräfte, einem dem ersten Modul nachgeschalteten zweiten Modul zur Ermittlung der aktuatorseitigen Systemsteifigkeit sowie einem dritten Modul zum Vergleichen der ermittelten Systemstefigkeit mit dem Schwellenwert. Es ist besonders sinnvoll, wenn dem ersten, dem zweiten sowie dem dritten Modul ein viertes Modul zur Zulässigkeitsprüfung parallel geschaltet ist, der als Eingangsgröße das die Aktuatorposition repräsentierende Signal zugeführt wird und die eine dritte Schaltvariable erzeugt, die die Funktion des zweiten und des dritten Moduls freigibt.

Weitere Einzelheiten, Merkmale und Vorteile der Erfindung gehen aus der nachfolgenden Beschreibung eines Ausführungsbeispiels unter Bezugnahme auf die beiliegende Zeichnung hervor. In der Zeichnung zeigt:
- Fig. 1: eine Ausführung eines Regelkreises zur Durchführung des erfindungsgemäßen Verfahrens,
- Fig. 2: den Aufbau des im Regelkreis gemäß Fig. 1 verwendeten Lüftspiel-Führungs- und Überwachungsmoduls, und
- Fig. 3: den Aufbau der im Regelkreis gemäß Fig. 1 verwendeten Einrichtung zur Feststellung des Anlegepunktes.

Die folgende Beschreibung bezieht sich zum besseren Verständnis des Prinzips auf eine elektrische Teilscheibenbremse. Das Verfahren ist jedoch auch ohne Modifikation bei anderen elektrisch betätigten Bremsen einsetzbar (z.B. elektrisch betätigte Trommelbremse). as Verfahren geht davon aus, daß zur Ermittlung des Anlegepunktes in der Einrichtung zur Feststellung des Anlegepunktes, ein Kontaktsignal K* gebildet wird, das eine binäre Information darüber liefert, ob mindestens einer der Bremsbeläge die Scheibe berührt oder nicht. Der Anlegepunkt repräsentiert die Aktuatorposition, in der die Beläge kraftlos an der Scheibe anliegen.

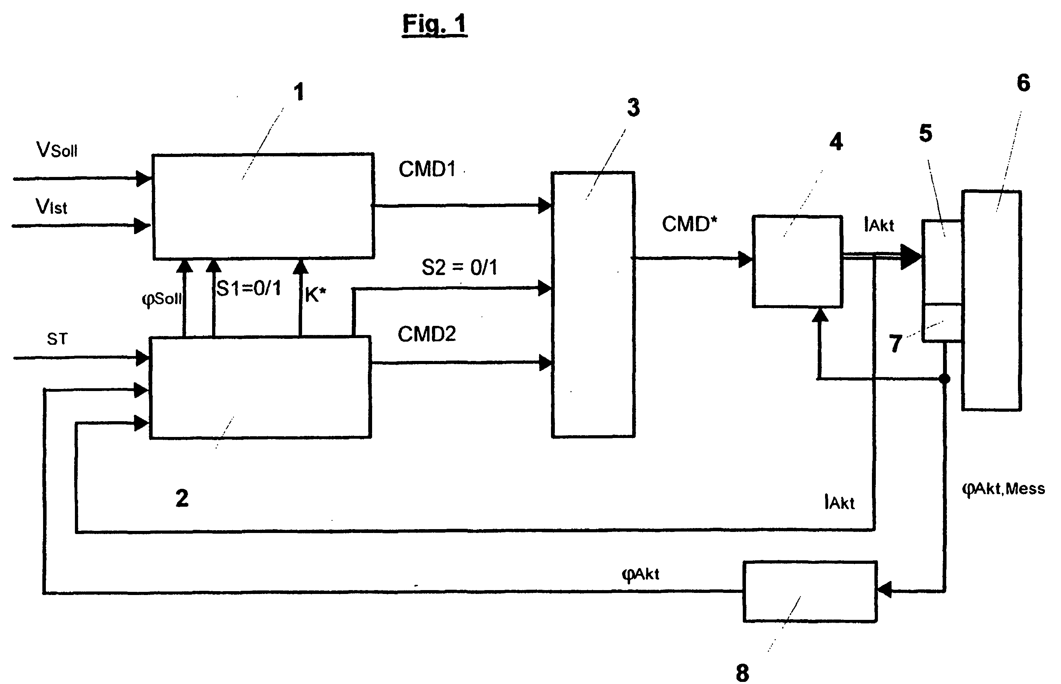

Das in Fig. 1 dargestellte Regelsystem besteht im wesentlichen aus einem Regler 1, einem Lüftspiel-Führungsund Überwachungsmodul 2, einer Auswahlschaltung 3 sowie einem der Auswahlschaltung 3 nachgeschalteten Servoverstärker 4, mit dessen Ausgangssignal I_{Akt} ein lediglich schematisch angedeuteter Aktuator 5 einer elektromechanisch betätigbarer Bremse angesteuert wird, die mit dem Bezugszeichen 6 versehen ist. Der Aktuator ist vorzugsweise mit einem Positionsmeßsystem 7 ausgestattet, dessen die Aktuator-Istposition repräsentierendes Ausgangssignal ϕ_{Akt,Mess} einerseits dem Servoverstärker 4 und andererseits einer Positionssignalaufbereitungsschaltung 8 zugeführt wird.

Der Regler 1 ist vorzugsweise umschaltbar ausgebildet und kann daher in einem ersten Regelmodus, in dem er eine Aktuatorpositionsregelung durchführt, oder in einem zweiten Regelmodus, in dem er eine Bremskraftregelung, eine Bremsmomentregelung oder eine Spannkraftregelung durchführt, betrieben werden. Seine Eingangsgrößen sind ein Spannkraft-Sollwert Vₛₒₗₗ, ein Spannkraft-Istwert Vᵢₛₜ, ein die Aktuator-Sollposition repräsentierendes Signal ϕ_{Soll}, eine Schaltvariable S₁ sowie das vorhin erwähnte Kontaktsignal K*, wobei seine Ausgangsgröße die Stellgröße CMD₁ darstellt, die der Auswahlschaltung 3 zugeführt wird. Der Verzögerungswunsch-Sollwert V_{Soll} wird von einer übergeordneten Ebene (z.B. Fahrerwunsch, ABS- bzw. ASMS-Regler) geliefert, während der Verzögerung-Istwert Vᵢₛₜ eine Reglerrückführungsgröße darstellt. Das der Aktuator-Sollposition entsprechende Signal ϕ_{Soll} sowie die Schaltvariable S₁ werden von dem Lüftspiel-Führungs- und Überwachungsmodul 2 geliefert, dessen Eingangsgrößen eine Steuervariable ST zum Aktivieren der Lüftspielerkennung, das dem dem Aktuator 5 zuzuführenden Strom entsprechende Ausgangssignal I_{Akt} des Servoverstärkers 4 sowie das Ausgangssignal ϕ_{Akt} der Positionssignalaufbereitungschaltung 8 darstellen. Die Ausgangssignale des Lüftspiel-Führungsund Überwachungsmodul 2 sind eine zweite Schaltvariable S₂, die das Verhalten der Auswahlschaltung 3 beeinflußt, eine zweite Stellgröße CMD₂ sowie das Kontaktsignal K*, das bei der Berührung zwischen mindestens einem der Bremsbeläge und der Bremsscheibe erzeugt wird.

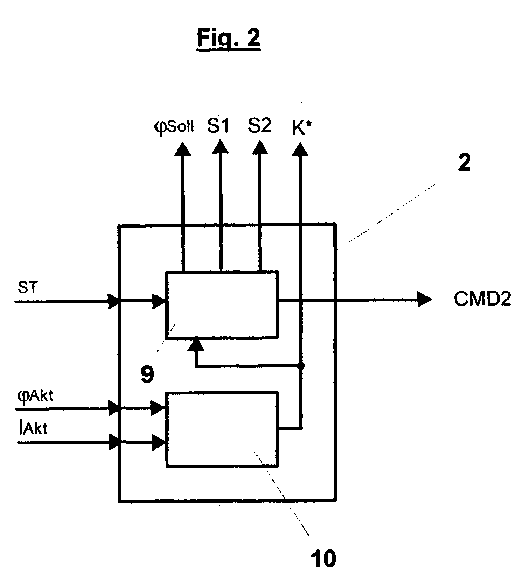

Wie insbesondere Fig. 2 zu entnehmen ist, besteht das Lüftspiel-Führungs- und Überwachungsmodul 2 aus zwei Funktionseinheiten, und zwar aus einem Sollwertgenerator 9 und einer Einrichtung zur Feststellung der Berührung zwischen dem Bremsbelag und der Bremsscheibe d.h. des Anlegepunktes, die mit dem Bezugszeichen 10 versehen ist. Die Eingangsgröße des Sollwertgenerators 9 bildet die vorhin erwähnte Steuervariable ST, die von einer übergeordneten (nicht näher spezifizierten) Funktionseinheit belegt wird. Durch diese Variable kann die übergeordnete Ebene Prozeduren zur Ermittlung, Einstellung und Nachstellung des Lüftspiels initiieren. Ausgänge des Sollwertgenerators 9 sind die zwei Schaltvariablen S₁ und S₂ sowie die Stellgröße CMD₂. Die Schaltvariable S₁ schaltet den Regler 1 zwischen Lageregelung und Kraft- bzw. Momentenregelung um. Die Schaltvariable S₂ schaltet entweder die Stellgröße CMD₁ des Reglers 1 oder die Stellgröße CMD₂ des Sollwertgenerators 9 auf den Eingang des Servoverstärkers 4.

Die Eingangsgrößen der Einrichtung 10 zur Feststellung des Anlegepunktes sind der Aktuatorstrom I_{Akt} und die Aktuatorposition ϕ_{Akt}. Sein Ausgang ist das oben erwähnte Kontaktsignal K*. Aufgrund dieses Signals erarbeitet der Sollwertgenerator 9 eine Ansteuerstrategie für den Regler 1 zur Lösung der o.g. Problemstellung.

Der Sollwertgenerator 9 hat drei Betriebsmodi:

### 1) Lüftspielerkennung für Lüftspielinitialisierung

Dieser Modus wird dafür eingesetzt das Lüftspiel zu bestimmen, falls die Absolutposition des Positionssignals des Aktuators unbekannt ist bzw. neu bestimmt werden muß. Das kann z.B. der Fall sein, wenn die Bremsbeläge und oder die Scheibe gewechselt wurden oder auch, wenn nach Abstellen des Fahrzeuges eine Neueinstellung des Lüftspiels erforderlich ist. Der Modus wird über die Steuervariable ST angestoßen. Befindet sich der Sollwertgenerator 9 in diesem Betriebsmodus, wird die Schaltvariable S₂ zunächst auf '1' gesetzt. Damit wird das Ausgangsignal CMD₂ des Lüftspiel-Führungs- und Überwachungsmoduls 2 auf die Leistungsansteuerung der Bremse 6 aufgeschaltet. Die Stellgröße CMD₁ des Reglers 1 bleibt ohne Wirkung. Bei der Umsetzung der Strategie für die Lüftspieleinstellung soll die Stellgröße CMD₂ nicht ein konstantes Aktuatormoment darstellen. Vielmehr ist es sinnvoll, die Stellgröße CMD₂ aus Aktuatormoment und Aktuatordrehzahl zu berechnen, wobei z.B. eine konstante Leistung P vorgegeben werden kann. Dies ist möglich, indem CMD₂ so vorgegeben wird, daß P = M_{Akt} · ω_{Akt} , wobei M_{Akt} aus den elektrischen Eingangsgrößen des Aktuators bestimmt werden kann (bei vielen Aktuatortypen ist M_{Akt} proportional zum Aktuatorstrom I_{Akt}).

Wird anhand des Positionssignals ϕ_{Akt} festgestellt, daß die Bremse gelüftet ist, also ein Lüftspiel vorhanden ist, so wird das Kontaktsignal K* beobachtet. Schaltet es auf '1'um, so liegt mindestens einer der Beläge an der Bremsscheibe an und der Sollwertgenerator 9 wird in den nachfolgend erläuterten Modus 3) - Lüftspieleinstellung - gebracht.

Wird anhand des Positionssignals ϕ_{Akt} festgestellt, daß die Bremse bereits zugespannt ist, so wird S₂ auf "0" gesetzt und der Regler 1 durch Belegen der Schaltvariablen S₁ mit "1" in Positionsregelmodus umgeschaltet. Die Bremse 6 wird geringfügig zurückgefahren und die Prozedur der oben beschriebenen Lüftspielerkennung für Lüftspielinitialiserung beginnt von neuem.

### 2) Lüftspielerkennung bei Bremsvorgängen

Während der Bremsvorgänge ändert sich das Lüftspiel durch verschiedenste Einflüsse (z.B. Belagwachsen durch Erwärmung, Belagabrieb durch Verschleiß etc.). Es ist jedoch ungünstig, eine Lüftspielinitialisierung während des Fahrbetriebs durchzuführen, da eine solche Initialisierung, basierend auf Aktuatorsignalen, immer ein Anfahren des einen Reibpartners an den anderen (verbunden mit einem geringen Bremsmoment) bedingt. Es ist daher wünschenswert, das Lüftspiel während vom Fahrer oder einem übergeordneten Regelsystem initiierter Bremsungen nachzustellen. Zu diesem Zweck wird der Sollwertgenerator 9 vor Beginn einer Bremsung in Modus 2) geschaltet. In diesem Modus beobachtet der Regler 1 oder eine übergeordnete Ebene das Kontaktsignal K*, bei dessen Umschalten von "0" auf "1" die Absolutposition ϕ₀ neu initialisiert wird. Wird nun ein Anfahren des Lüftspiels gewünscht (Modus "3"), so wird die Sollposition für das Lüftspiel mit der aktuellen Absolutposition berechnet.

### 3) Lüftspieleinstellung

Der dritte Modus - Lüftspieleinstellung - dient dem Anfahren des Lüftspiels nach Abschluß einer erfolgreichen Lüftspieierkennung im Modus "1" oder nach Beendigung eines Bremsvorganges. Zu diesem Zweck schaltet der Sollwertgenerator 9 den Regler 1 über die Schaltvariable S₁ = 1 in den Positionsregelmodus. Über die Schaltvariable S₂ = 0 sorgt der Sollwertgenerator 9 dafür, daß das Ausgangssignal CMD₁ des Reglers 1 am Eingang des Servoverstärkers 4 anliegt. Mittels des Ausgangsignals ϕ_{Soll} des Sollwertgenerators 9 wird dem Regler 1 der Positionssollwert für das Lüftspiel mitgeteilt. Dieser Positionssollwert berechnet sich aus der absoluten Nullposition ϕ₀ (Initialisierung bzw. Adaption über Kontaktsignal K*) und dem vorher festgelegten Lüftspiel ϕ_{LS}. Für das Positionssollwertsignal ergibt sich damit ϕSoll = ϕ₀ - ϕ_{LS}

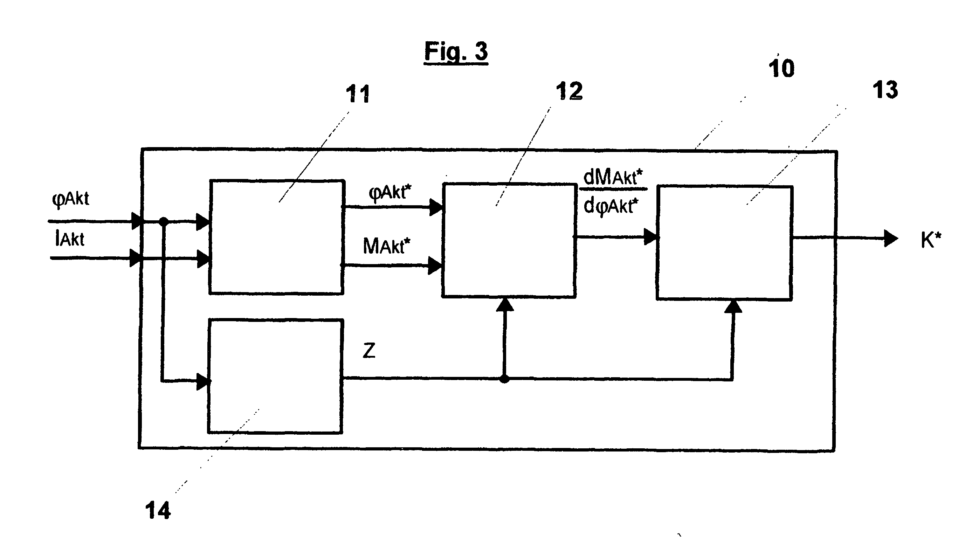

In Fig. 3 ist schließlich der Aufbau der im Zusammenhang mit Fig. 2 erwähnten Einrichtung 10 zur Feststellung des Anlegepunktes gezeigt. Wie der schematischen Darstellung zu entnehmen ist, besteht die Einrichtung prinzipiell aus vier Modulen. Das erste Modul 11 dient der Signalkonditionierung, d.h., der Signalfilterung und der Kompensation der im System auftretenden Trägheitskräfte. Die Eingangsgrößen Aktuatormoment (bzw. eine proportionale Größe - hier Aktuatorstrom I_{Akt}) und Aktuatorwinkel ϕ_{Akt} werden zunächst tiefpaßgefiltert, um sie von Störungen zu befreien. Hierbei wird vorzugsweise ein sog. Besselfilter eingesetzt, das eine zeitlich konstante Phasenverschiebung der gefilterten Signale bewirkt. Anschließend wird in diesem Modul 11 aus dem dem Aktuatormoment proportionalen Eingangssignal I_{Akt} das Aktuatormoment M_{Akt} berechnet. Die Kompensation der Trägheitsmomente 'bereinigt' das Aktuatormomentensignal M_{Akt} um die gesamten Massenträgheitsmomente der Bremse, die durch den Aktuator 5 beschleunigt werden müssen. Dies ist notwendig, da für die Berechnung der aktuatorseitigen Systemsteifigkeit nur das Aktuatormoment zum Aufbringen der Betätigungskraft (Verspannen der Reibpartner) und das Reibmoment relevant sind. Ausgangsgrößen dieses Moduls 1 sind damit das gefilterte Aktuatorlagesignal ϕ_{Akt}* und das gefilterte und um die Trägheitsmomente korrigierte Aktuatormomentensignal M_{Akt}*.

Im zweiten Modul 12 wird die aktuatorseitige Systemsteifigkeit ermittelt bzw. berechnet. Unter der aktuatorseitigen Systemsteifigkeit ist der Quotient dM_{Akt}*/dϕ_{Akt}* zu verstehen. Durch die Ableitung des Aktuatormoments nach dem Aktuatorwinkel wird erreicht, daß nicht ein zeitlicher Anstieg, sondern ein positionsabhängiger Anstieg des Aktuatormomentes (wie er beim Anlegen des einen Reibpartners an den anderen Reibpartner auftritt), abgebildet wird. Dies hat den Vorteil, daß der zeitliche Verlauf der Bewegung der Bremse 6 für das zur Kontaktdetektion beobachtete Signal dM_{Akt}*/dϕ_{Akt}* nicht relevant ist. Der Verlauf des Signals 'motorseitige Systemsteifigkeit' ist deshalb unabhängig davon, mit welchem Verlauf die Bremse 6 zugespannt wird.

Das dritte Modul 13 generiert durch Vergleich des Quotienten dM_{Akt}*/dϕ_{Akt}* mit einem Schwellenwert SW das Kontaktsignal K*. Das Signal wird z.B. auf den Wert "1" gesetzt, wenn der Schwellenwert überschritten und auf "0" gesetzt, wenn der Schwellenwert SW unterschritten wird.

Das den Modulen 11 - 13 parallelgeschaltete vierte Modul 14, dem als Eingangsgröße das der Aktuatorposition entsprechende Signal ϕ_{Akt} zugeführt wird, prüft anhand verschiedener Bedingungen, ob die Generierung des Kontaktsignals K* zum momentanen Zeitpunkt sinnvoll bzw. zulässig ist und ob das Kontaktsignal K* an sich gültig ist. Ist das Kontaktsignal K* gültig, schaltet das vierte Modul 14 dieses Kontaktsignal durch Setzen einer Schaltvariablen Z = 1 auf den Ausgang der Einrichtung 10 und gibt die Berechnung des Quotienten dM_{Akt}*/dϕ_{Akt}* im zweiten Modul 12 frei. Durch die Verwendung der dritten Variablen Z wird verhindert, daß z.B. bei Stillstand der Bremse (dϕ_{Akt}* = 0) ein ungültiges Ausgangssignal oder eine ungültige Operation zustandekommt (z.B. Division durch '0').

Wie bereits oben erwähnt, ist als Eingang zum Prüfen verschiedener Plausibilitätsbedingungen in Fig. 3 die Aktuatorposition ϕ_{Akt} vorgesehen. Es ist jedoch denkbar, daß noch andere Signale für die Zulässigkeitsprüfung herangezogen werden.

## Patentansprüche

1. Verfahren zum Steuern oder Regeln einer Bremse, mit einer mittels eines Aktuators elektrisch betätigbaren ersten Reibfläche sowie einer zweiten Reibfläche, zwischen denen ein Lüftspiel vorgesehen ist, mit Mitteln, die direkt oder indirekt die Position des Aktuators sowie den dem Aktuator zuzuführenden Strom erfassen, und mit einer Einrichtung, die das Anlegen der ersten an die zweite Reibfläche feststellt und daraufhin ein Kontaktsignal erzeugt, wobei zur Feststellung des Anlegens die Änderung des Aktuatorstromes (I_{Akt}) und die Änderung der Aktuatorposition (ϕ_{Akt}) ausgewertet werden und dem ermittelten Aktuatorstrom (I_{Akt}) ein Aktuatormoment (M_{Akt}) bzw. eine Aktuatorkraft (F_{Akt}) zugeordnet wird, **dadurch gekennzeichnet, daß** zur Feststellung des Anlegens die aktuatorseitige Systemsteifigkeit als Ableitung des Aktuatormoments (M_{Akt}) bzw. der Aktuatorkraft (F_{Akt}) nach der Aktuatorposition (ϕ_{Akt}) ermittelt und überwacht wird.

2. Verfahren nach Anspruch 1 **dadurch gekennzeichnet, daß** die aktuatorseitige Systemsteifigkeit auf Über- oder Unterschreiten eines Schwellenwerts (SW) überwacht wird.

3. Verfahren nach einem der Ansprüche 1 oder 2, **dadurch gekennzeichnet, daß** ausgehend von der dem Anlegepunkt entsprechenden Aktuatorposition (ϕ_{Akt}) das Lüftspiel (ϕ_{LS}) eingestellt wird.

4. Verfahren nach Anspruch 3, **dadurch gekennzeichnet, daß** die Einstellung des Lüftspiels (ϕ_{LS}) mittels eines Reglers (1) erfolgt, der die Aktuatorposition (ϕ_{Akt}) ändert.

5. Verfahren nach Anspruch 1, **dadurch gekennzeichnet, daß** die Feststellung des Anlegens während einer definierten Bewegung der ersten Reibfläche auf die zweite Reibfläche erfolgt.

6. Verfahren nach Anspruch 1, **dadurch gekennzeichnet, daß** die Feststellung des Anlegens während der Betätigung der Bremse erfolgt.

7. Verfahren nach Anspruch 5, **dadurch gekennzeichnet, daß** bei der Bewegung der Aktuator (5) im Sinne der Abgabe einer konstanten mechanischen Leistung angesteuert wird.

8. Verfahren nach Anspruch 5, **dadurch gekennzeichnet, daß** bei der Bewegung der Aktuator (5) mit einem definierten Stromwert (I_{Akt,Soll}) angesteuert wird.

9. Verfahren nach Anspruch 5, **dadurch gekennzeichnet, daß** bei der Bewegung der Aktuator (5) mit einer definierten Aktuatorgeschwindigkeit (ω_{Akt,Soll}) angesteuert wird.

10. Verfahren nach Anspruch 5, **dadurch gekennzeichnet, daß** bei der Bewegung der Aktuator (5) derart angesteuert wird, daß die gewichtete Summe aus Aktuatorstrom (I_{Akt}) und Aktuatorgeschwindigkeit (ω_{Akt}) konstant ist.

11. System zum Steuern oder Regeln einer Bremse, mit einer mittels eines Aktuators elektrisch betätigbaren ersten Reibfläche sowie einer zweiten Reibfläche, zwischen denen ein Lüftspiel vorgesehen ist, mit Mitteln, die direkt oder indirekt die Position des Aktuators sowie den dem Aktuator zuzuführenden Strom erfassen, und mit einer Einrichtung, die das Anlegen der ersten an die zweite Reibfläche feststellt und daraufhin ein Kontaktsignal erzeugt,insbesondere nach einem der vorhergehenden Ansprüche, **dadurch gekennzeichnet, daß**
a) ein zwischen einem ersten und einem zweiten Regelmodus umschaltbarer Regler (1) vorgesehen ist, dem als Eingangsgrößen einen Sollwert (V_{Soll}) und einen Istwert (V_{Ist}) einer bei der Betätigung der Bremse gewünschten Kraft oder eines Moments repräsentierende Signale, ein die Aktuator-Sollposition (ϕ_{Soll}) repräsentierendes Signal, eine Schaltvariable (S₁) sowie ein das Anlegen der ersten an die zweite Reibfläche repräsentierendes Signal (K*) zugeführt werden und der eine erste Stellgröße (CMD₁) erzeugt,
b) ein Lüftspiel-Führungs- und Überwachungsmodul (2) vorgesehen ist, dem als Eingangsgrößen eine Steuervariabie (ST) zum Aktivieren der Lüftspielerkennung sowie Signale zugeführt werden, die dem dem Aktuator (5) zuzuführenden Strom (I_{Akt}) sowie der Aktuatorposition (ϕ_{Akt}) entsprechen und welches das die Aktuator-Sollposition (ϕ_{Soll}) repräsentierende Signal, die Schaltvariable (S₁), eine zweite Schaltvariable (S₂) sowie das das Anlegen der ersten an die zweite Reibfläche repräsentierendes Signal (K*) liefert und eine zweite Stellgröße (CMD₂) erzeugt,
c) wobei die erste Stellgröße (CMD₁) und die zweite Stellgröße (CMD₂) einer Auswahlschaltung (3) zugeführt werden, die in Abhängigkeit von der zweiten Schaltvariablen (S₂) eine der beiden Stellgrößen (CMD₁,CMD₂) einer elektronischen Ansteuerschaltung (Servoverstärker 4) zuführt, mit deren Ausgangssignal (I_{Akt}) der Aktuator (5) angesteuert wird.

12. System nach Anspruch 11 **dadurch gekennzeichnet, daß** der erste Regelmodus einer Aktuatorpositionsregelung und der zweite Regelmodus einer Bremskraft-/-moment- oder Verzögerungsregelung entspricht.

13. System nach Anspruch 11 oder 12 **dadurch gekennzeichnet, daß** das Lüftspiel-Führungs- und Überwachungsmodul (2) aus einem Sollwertgenerator (9) sowie einer Einrichtung (10) zur Feststellung des Anlegepunktes besteht, wobei dem Sollwertgenerator (9) die Steuervariable (ST), und der Einrichtung (10) zur Feststellung des Anlegepunktes die Signale als Eingangsgrößen zugeführt werden, die dem dem Aktuator (5) zuzuführenden Strom (I_{Akt}) sowie der Aktuatorposition (ϕ_{Akt}) entsprechen und wobei der Sollwertgenerator (9) das die Aktuator-Sollposition (ϕ_{Soll}) repräsentierende Signal, die erste Schaltvariable (S₁), die zweite Schaltvariable (S₂) sowie die zweite Stellgröße (CMD₂) und die Einrichtung (10) zur Feststellung des Anlegepunktes das das Anlegen der ersten an die zweite Reibfläche repräsentierende Signal (K*) erzeugen.

14. System nach Anspruch 13, **dadurch gekennzeichnet, daß** die Einrichtung (10) zur Feststellung des Anlegepunktes aus einem ersten Modul (11) zur Signalfilterung und Kompensation der Trägheitskräfte, einem dem ersten Modul (11) nachgeschalteten zweiten Modul (12) zur Ermittlung der aktuatorseitigen Systemsteifigkeit sowie einem dritten Modul (13) zum Vergleichen der ermittelten Systemsteifigkeit mit einem Schwellenwert (SW) besteht.

15. System nach Anspruch 14, **dadurch gekennzeichnet, daß** dem ersten (11), dem zweiten (12) sowie dem dritten Modul (13) ein viertes Modul (14) zur Zulässigkeitsprüfung parallelgeschaltet ist, dem als Eingangsgröße das die Aktuatorposition (ϕ_{Akt}) oder andere, die Aktuatorspannung oder den Aktuatorstrom repräsentierende Signale zugeführt werden und das eine dritte Schaltvariable (Z) erzeugt, die die Funktion des zweiten (12) und des dritten Moduls (13) freigibt.

## Claims

1. Method of controlling or regulating a brake, including a first friction surface which is electrically operable by means of an actuator and a second friction surface, a clearance being provided between the friction surfaces, means which sense directly or indirectly the position of the actuator as well as the current being supplied to the actuator, and a device which detects when the first friction surface moves into contact with the second friction surface and subsequently generates a contact signal, wherein the change in the actuator current (I_{Akt}) and the change in the actuator position (ϕ_{Akt}) are evaluated for detecting the said contact making, and an actuator torque (M_{Akt}) or an actuator force (F_{Akt}), respectively, is associated with the determined actuator current (I_{Akt}),
**characterized in that** for detecting the contact making, the rigidity of the system on the part of the actuator is determined as a derivative of the actuator torque (M_{Akt}) or the actuator force (F_{Akt}) plotted against the actuator position (ϕ_{Akt}) and monitored.

2. Method as claimed in claim 1,
**characterized in that** the actuator-side system rigidity is monitored as to whether its value exceeds or falls below a threshold value (SW).

3. Method as claimed in claim 1 or 2,
**characterized in that** the clearance (ϕ_{LS}) is adjusted based on the actuator position (ϕ_{Akt}) which corresponds to the point of contact.

4. Method as claimed in claim 3,
**characterized in that** the clearance (ϕ_{LS}) is adjusted by means of a controller (1) which changes the actuator position (ϕ_{Akt}).

5. Method as claimed in claim 1,
**characterized in that** the contact making is detected during a defined movement of the first friction surface against the second friction surface.

6. Method as claimed in claim 1,
**characterized in that** the contact making is detected during actuation of the brake.

7. Method as claimed in claim 5,
**characterized in that** during the movement the actuator (5) is driven so as to provide a constant mechanical output.

8. Method as claimed in claim 5,
**characterized in that** during the movement the actuator (5) is driven with a defined current value (I_{Akt,Soll}).

9. Method as claimed in claim 5,
**characterized in that** during the movement the actuator (5) is driven with a defined actuator speed (ω_{Akt,Soll}).

10. Method as claimed in claim 5,
**characterized in that** during the movement the actuator (5) is driven so that the weighted sum made up of actuator current (I_{Akt}) and actuator speed (ω_{Akt}) is constant.

11. System of controlling or regulating a brake, including a first friction surface which is electrically operable by means of an actuator and a second friction surface, a clearance being provided between the friction surfaces, means which sense directly or indirectly the position of the actuator as well as the current being supplied to the actuator, and a device which detects when the first friction surface moves into contact with the second friction surface and subsequently generates a contact signal, more particularly as claimed in any one of the preceding claims,
**characterized in that**
a) there is provision of a controller (1) which can be switched between a first and a second control mode, and to which are sent, as input quantities, signals representative of a nominal value (V_{Soll}) and an actual value (V_{Ist}) of a force or a torque desired in the actuation of the brake, a signal representative of the nominal actuator position (ϕ_{Soll}), a switching variable (S₁) as well as a signal (K*) representative of the contact making of the first friction surface on the second friction surface, and the controller generating a first correcting variable (CMD₁),
b) there is provision of a clearance guiding and monitoring module (2) to which are sent, as input quantities, a control variable (ST) for activating the clearance detection and signals which correspond to the current (I_{Akt}) being supplied to the actuator (5) and to the actuator position (ϕ_{Akt}), and which supplies the signal representative of the nominal actuator position (ϕ_{Soll}), the switching variable (S₁), a second switching variable (S₂), as well as the signal (K*) representative of the contact making of the first friction surface on the second friction surface, and generates a second correcting variable (CMD₂),
c) wherein the first correcting variable (CMD₁) and the second correcting variable (CMD₂) are sent to a selection circuit (3) which, as a function of the second switching variable (S₂), sends one of the two correcting variables (CMD₁, CMD₂) to an electronic activating circuit (servo booster 4), whose output signal (I_{Akt}) is used to drive the actuator (5).

12. System as claimed in claim 11,
**characterized in that** the first control mode corresponds to an actuator position control, and the second control mode corresponds to a brake force/brake torque control or a deceleration control.

13. System as claimed in claim 11 or claim 12,
**characterized in that** the clearance guiding and monitoring module (2) includes a nominal value generator (9) and a device (10) for detecting the point of contact, wherein the nominal value generator (9) is furnished with the control variable (ST), and the device (10) for detecting the point of contact is furnished, as input quantities, with the signals which correspond to the current (I_{Akt}) being supplied to the actuator (5) and the actuator position (ϕ_{Akt}), and wherein the nominal value generator (9) generates the signal representative of the nominal actuator position (ϕ_{Soll}), the first switching variable (S₁), the second switching variable (S₂), and the second correcting variable (CMD₂), and the device (10) for detecting the point of contact generates the signal (K*) representative of the contact making of the first friction surface on the second friction surface.

14. System as claimed in claim 13,
**characterized in that** the device (10) for detecting the point of contact includes a first module (11) for signal filtering and compensation of the inertia forces, a second module (12) connected downstream of the first module (11) for determining the actuator-side system rigidity, and a third module (13) for comparing the system rigidity found with a threshold value (SW).

15. System as claimed in claim 14,
**characterized in that** a fourth module (14) is connected in parallel to the first (11), the second (12), and the third module (13) for the allowability check, to which fourth module are sent, as an input quantity, the signals representative of the actuator position (ϕ_{Akt}) or other signals representative of the actuator voltage or the actuator current, and which generates a third switching variable (Z) that releases the function of the second (12) and the third module (13).

## Revendications

1. Procédé de commande ou de régulation d'un frein, comportant une première surface de friction, actionnable électriquement au moyen d'un actionneur, ainsi qu'une deuxième surface de friction, entre lesquelles est prévu un jeu de desserrement, comportant des moyens qui détectent directement ou indirectement la position de l'actionneur ainsi que le courant à amener à l'actionneur, et comportant un dispositif qui détecte l'application de la première surface de friction contre la deuxième et produit à la suite un signal de contact, la variation du courant de l'actionneur (I_{Akt}) et la variation de la position de l'actionneur (ϕ_{Akt}) étant exploitées pour détecter l'application et un moment de l'actionneur (M_{Akt}) respectivement une force de l'actionneur (F_{Akt}) étant affecté au courant (I_{Akt}) déterminé de l'actionneur, **caractérisé en ce que** pour détecter l'application, on détermine et on surveille la rigidité du système côté actionneur en tant que dérivation du moment (M_{Akt}) de l'actionneur respectivement de la force (F_{Akt}) de l'actionneur par rapport à la position (ϕ_{Akt}) de l'actionneur.

2. Procédé selon la revendication 1, **caractérisé en ce que** pour la surveillance de la rigidité du système côté actionneur, on surveille si il est passé au-dessus ou au-dessous d'une valeur seuil (SW).

3. Procédé selon la revendication 1 ou 2, **caractérisé en ce que** partant de la position de l'actionneur (ϕ_{Akt}) correspondant au point d'application, on règle le jeu de desserrement (ϕ_{LS}).

4. Procédé selon la revendication 3, **caractérisé en ce que** le réglage du jeu de desserrement (ϕ_{LS}) s'effectue au moyen d'un régulateur (1) qui fait varier la position (ϕ_{Akt}) de l'actionneur.

5. Procédé selon la revendication 1, **caractérisé en ce que** la détection de l'application s'effectue pendant un mouvement défini de la première surface de friction sur la deuxième surface de friction.

6. Procédé selon la revendication 1, **caractérisé en ce que** la détection de l'application s'effectue pendant l'actionnement du frein.

7. Procédé selon la revendication 5, **caractérisé en ce que** pendant le mouvement l'actionneur (5) est commandé dans le sens de la fourniture d'une puissance mécanique constante.

8. Procédé selon la revendication 5, **caractérisé en ce que** pendant le mouvement, l'actionneur (5) est commandé avec une valeur de courant définie (I_{Akt,Soll}).

9. Procédé selon la revendication 5, **caractérisé en ce que** le pendant le mouvement, l'actionneur (5) est commandé avec une vitesse de l'actionneur définie (ω_{Akt, Soll}).

10. Procédé selon la revendication 5, **caractérisé en ce que** pendant le mouvement, l'actionneur (5) est commandé de manière que la somme pondérée du courant de l'actionneur (Iₐₖₜ) et de la vitesse de l'actionneur (ωₐₖₜ) soit constante.

11. Système pour la commande ou la régulation d'un frein, comportant une première surface de friction, actionnable électriquement au moyen d'un actionneur, ainsi qu'une deuxième surface de friction, entre lesquelles est prévu un jeu de desserrement, comportant des moyens qui détectent directement ou indirectement la position de l'actionneur ainsi que le courant à amener à l'actionneur, et comportant un dispositif qui détecte l'application de la première surface de friction contre la deuxième surface de friction et produit à la suite un signal de contact, en particulier selon l'une des revendications précédentes, **caractérisé en ce que**
a) il est prévu un régulateur (1) qui peut commuter entre un premier et un deuxième modes de régulation, auquel sont envoyés en tant que grandeurs d'entrée, des signaux représentant une valeur de consigne (V_{Soll}) et une valeur réelle (V_{Ist}) d'une force voulue pendant l'actionnement du frein ou d'un moment, un signal représentant la position de consigne de l'actionneur (ϕ_{Soll}), une variable de commutation (S₁) ainsi qu'un signal (K*) représentant l'application de la première surface de friction contre la deuxième surface de piston et qui produit une première grandeur de réglage (CMD₁),
b) il est prévu un module de guidage de jeu de desserrement et de surveillance (2) auquel sont envoyés en tant que grandeurs d'entrée, une variable de commande (ST) pour l'activation de la reconnaissance du jeu de desserrement ainsi que des signaux qui correspondent au courant (I_{Akt}) à envoyer à l'actionneur (5) ainsi qu'à la position de l'actionneur (ϕ_{Akt}), et qui produit le signal représentant la position de consigne de l'actionneur (ϕ_{Soll}), la variable de commutation (S₁), une deuxième variable de commutation (S₂), ainsi que le signal (K*) représentant l'application de la première phase de friction contre la deuxième, ainsi qu'une deuxième grandeur de réglage (CMD₂),
c) la première grandeur de réglage (CMD₁) et la deuxième grandeur de réglage (CMD₂) étant acheminées vers un circuit de sélection (3) qui envoie l'une des deux grandeurs de réglable (CMD₁, CMD₂), en fonction de la deuxième variable de commutation (S₂), à un circuit de commande électronique (servo amplificateur 4) dont le signal de sortie (I_{Akt}) commande l'actionneur (5).

12. Système selon la revendication 11, **caractérisé en ce que** le premier mode de régulation correspond à une régulation de la position de l'actionneur et le deuxième mode de régulation à une régulation de la force de freinage/du moment de freinage ou à une régulation de retard.

13. Système selon la revendication 11 ou 12, **caractérisé en ce que** le module de guidage de jeu de desserrement et de surveillance (2) est constitué d'un générateur (9) de valeurs de consigne ainsi que d'un dispositif (10) pour détecter le point d'application, au générateur de valeur de consigne (9) étant envoyée la variable de commande (ST), et au dispositif (10) de dtection du point d'application étant envoyés en tant que grandeurs d'entrée les signaux qui correspondent au courant (I_{Akt}) à amener à l'actionneur (5) ainsi qu'à la position de l'actionneur (ϕ_{Akt}), et le générateur de valeurs de consigne (9) produisant le signal qui représente la position de consigne (ϕ_{Soll}) de l'actionneur, la première variable de commutation (S1), la deuxième variable de commutation (S2) ainsi que la deuxième grandeur de réglage (CMD₂) et le dispositif (10) de détection du point d'application produisant le signal (K') qui représente l'application de la première surface de friction contre la deuxième surface de friction.

14. Système selon la revendication 13, **caractérisé en ce que** le dispositif (10) de détection du point d'application est constitué d'un premier module (11) pour le filtrage des signaux et la compensation des forces d'inertie, d'un deuxième module (12) monté derrière le premier module (11) pour déterminer la rigidité du système côté actionneur, ainsi que d'un troisième module (13) pour comparer la rigidité déterminée du système avec une valeur seuil (SW).

15. Système selon la revendication 14, **caractérisé en ce que** parallèlement au premier module (11), au deuxième module (12) ainsi qu'au troisième module (13) est monté un quatrième module (14) pour la vérification d'admissibilité, auquel est envoyé en tant que grandeurs d'entrée, le signal représentant la position (ϕ_{Akt}) de l'actionneur ou d'autres signaux représentant la tension de l'actionneur ou le courant de l'actionneur, et qui produit une troisième variable de commutation (Z) qui autorise le fonctionnement du deuxième module (12) et du troisième module (13).
